# EUROPÄISCHE PATENTANMELDUNG

(11) **EP 3 513 961 A1**
(43) Veröffentlichungstag der Anmeldung: **24.07.2019**
(21) Anmeldenummer: 18000924.3
(22) Anmeldetag: 28.11.2018
(51) Int. Cl.: B32B 5/02, B32B 5/06, B32B 7/12, B32B 7/14, B32B 27/12, B32B 27/30, B32B 27/32, B32B 27/34, B32B 27/40, E04B 1/62, E04D 12/00

(54) **BAUFOLIE**

(30) Priorität: 19.01.2018 DE 102018000411
(71) Anmelder: K.L. Kaschier- und Laminier GmbH, 48455 Bad Bentheim-Gildehaus (DE)
(72) Erfinder: Wehninck, Rembert Schulze, 82327 Tutzing (DE); Kischa, Lars, 51674 Wiehl (DE)
(74) Vertreter: Cohausz Hannig Borkowski Wißgott

(57) **Zusammenfassung**

Die Erfindung betrifft eine Baufolie in oder an der Außenwand eines Gebäudes, gekennzeichnet durch mindestens zwei Schichten mit einer stabilen, den Brandschutz erhöhenden Unterbahn aus Glasvlies oder Glasgewebe und einer darüber oder darunter befestigten Folie oder Membrane aus Polyamid, Polyurethan, Plyethylen oder einem Acrylat.

## Beschreibung

Die Erfindung betrifft eine Baufolie in oder an der Außenwand eines Gebäudes.

Baufolien werden für unterschiedliche Zwecke an Gebäuden verwendet. Sie dienen u.a. zum Abdecken, Unterschalungsbahn, Unterdeckbahn und Dampfbremse.

Aufgabe der Erfindung ist es, eine Baufolie zu schaffen, mit den Eigenschaften
- eines sicheren Schutzes gegen Feuchtigkeit,
- eines guten Feuchtigkeitsaustrages,
- einer hohen Stabilität und
- einer hohen Brandsicherheit.

Diese Aufgabe wird erfindungsgemäß gekennzeichnet durch mindestens zwei Schichten mit einer stabilen, den Brandschutz erhöhenden Unterbahn aus Glasvlies oder Glasgewebe und einer darüber oder darunter befestigten Folie oder Membrane aus Polyamid, Polyurethan, Plyethylen oder einem Acrylat.

Eine solche Baufolie ist für die verschiedensten Zwecke bei Bauten verwendbar, sowohl während der Erstellung des Gebäudes als auch für spätere Baumaßnahmen. Feuchtigkeit insbesondere Regen wird sicher abgehalten und vorhandene Feuchtigkeit ausgetragen. Die hohe Stabilität der Folie sichert eine hohe Reißfestigkeit, einen guten Durchfallschutz und eine hohe Nagelausreißfestigkeit. Darüber hinaus besteht eine hohe Brandsicherheit.

Einen sicheren Halt der Schichten aneinander ist gegeben, wenn die Folie oder Membran auf der Unterbahn durch einen Kleber insbesondere punktuell befestigt ist. Hierbei wird vorgeschlagen, dass der Kleber ein Polyurethan-Kleber oder ein Acrylat-Kleber ist.

Vorzugsweise ist die Folie oder Membran flammhemmend ausgerüstet. Eine besonders hohe Stabilität wird erreicht, wenn die Unterbahn aus Glasvlies oder Glasgewebe ein Flächengewicht von 20 g/m² bis 450 g/m² aufweist. Ferner ist von Vorteil, wenn die Folie oder Membran eine Dicke von 10-50 µm aufweist.

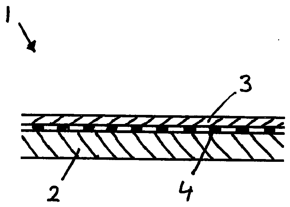

Ein Ausführungsbeispiel der Erfindung ist in der Zeichnung in einem Querschnitt dargestellt.

Die Baufolie weist als stabile und nicht brennbare Unterlage eine Unterbahn 2 auf aus einem Glasvlies oder einem Glasgewebe mit einem Flächengewicht von 20 bis 450 g/m². An diese Unterbahn ist eine Folie oder Membran 3 deckungsgleich befestigt, die aus Polyamid, Polyurethan, Plyethylen oder einem Acrylat besteht und eine Dicke von 10 bis 50 µm aufweist. Die Folie oder Membran ist vorzugsweise flammhemmend ausgerüstet.

Die Folie oder Membran 3 ist auf der Unterbahn 2 aufgeklebt durch einen Polyurethan- oder Acrylat-Kleber. Hierbei besteht keine großflächige Klebung, sondern der Kleber ist punktweise aufgetragen.

## Patentansprüche

1. Baufolie in oder an der Außenwand eines Gebäudes, **gekennzeichnet durch** mindestens zwei Schichten mit einer stabilen, den Brandschutz erhöhenden Unterbahn (2) aus Glasvlies oder Glasgewebe und einer darüber oder darunter befestigten Folie oder Membrane (3) aus Polyamid, Polyurethan, Plyethylen oder einem Acrylat.

2. Baufolie nach Anspruch 1, **dadurch gekennzeichnet, dass** die Folie oder Membran (3) auf der Unterbahn (2) durch einen Kleber (4) insbesondere punktuell befestigt ist.

3. Unterdeckbahn nach Anspruch 2, **dadurch gekennzeichnet, dass** der Kleber (4) ein Polyurethan-Kleber oder ein Acrylat-Kleber ist.

4. Unterdeckbahn nach einem der vorherigen Ansprüche, **dadurch gekennzeichnet, dass** die Folie oder Membran (3) flammhemmend ausgerüstet ist.

5. Unterdeckbahn nach einem der vorherigen Ansprüche, **dadurch gekennzeichnet, dass** die Unterbahn (2) aus Glasvlies oder Glasgewebe ein Flächengewicht von 20 g/m² bis 450 g/m² aufweist.

6. Unterdeckbahn nach einem der vorherigen Ansprüche, **dadurch gekennzeichnet, dass** die Folie oder Membran (3) eine Dicke von 10-50 µm aufweist.
